# EUROPEAN PATENT APPLICATION

(11) **EP 0 809 042 A2**
(43) Date of publication of application: **26.11.1997**
(21) Application number: 96120374.2
(22) Date of filing: 18.12.1996
(51) Int. Cl.: F16H 3/30, F16H 57/08

(54) **Frictional engagement element with stationary servo cylinder for planetary transmission**

(30) Priority: 21.05.1996 JP 148523/96; 27.09.1996 JP 275312/96
(71) Applicant: AISIN AW CO., LTD., Anjo-shi Aichi-ken 444-11 (JP)
(72) Inventor: Kasuya, Satoru, Anjo-shi, Aichi-ken 444-11 (JP); Sugiura, Nobutada, Anjo-shi, Aichi-ken 444-11 (JP); Tsukamoto, Kazumasa, Anjo-shi, Aichi-ken 444-11 (JP); Hayabuchi, Masahiro, Anjo-shi, Aichi-ken 444-11 (JP); Nishida, Masaaki, Anjo-shi, Aichi-ken 444-11 (JP)
(74) Representative: Hoffmann, Eckart, Dipl.-Ing.

(57) **Abstract**

A stationary cylinder type of power transmission apparatus includes two rotational members 53 and 54, a thrust member 33 and a reactional member 56. A frictional engagement element 50 is disposed between and linked to the two rotational members 53 and 54 such that the frictional engagement element 50 freely transmits a rotational force to an outer periphery of one of the rotational members 53 and to an inner periphery of the other rotational member 54. The frictional engagement element 50 is engageable by and disposed between the thrust member 33 and the reactional member 56 in the axial direction. A bearing 32 is disposed interior to the frictional engagement element 50 in the radial direction, such that the thrust member 33 extends in the radial direction from the bearing 32 and along the frictional engagement element 50. A hydraulic servo 3 applies a force in the axial direction to the thrust member 33 via the bearing 32, such that the thrust member 33 transmits the force to the frictional engagement element 50, thereby engaging the frictional engagement element 50 with the thrust member 33 and the reactional member 56. An expulsion port 33A is also provided. A space S is created when the frictional engagement element 50 is engaged with the thrust member 33 and the reactional member 56. The expulsion port 33A is contiguous with an exterior side of the space S. Oil is supplied to the space S from an interior side of the frictional engagement element 50. The expulsion port 33A expels oil from the exterior side of the space S to outside of the space S.

## Description

The invention relates to a stationary cylinder type of hydraulic servo provided in a power transmission, and in particular, to an apparatus for preventing the confinement of oil that is provided to lubricate a frictional engagement element.

In a conventional power transmission apparatus for transmitting rotational force, such as a clutch, a stationary cylinder type of non-rotational member, such as a transmission case, is provided. A hydraulic servo is disposed to engage and disengage from a frictional engagement element. The frictional engagement element is linked to two rotational members such as a hub and a drum. The hub and drum are input/output force members. In this construction, the bearing must be disposed to transmit a force in the axial direction while avoiding rotational force of the two rotational members. The bearing transmits the axial force from a non-rotating piston at the hydraulic servo side of the apparatus to the frictional engagement element while it is rotating. Conventionally, and as disclosed in Japanese Laid-open Patent Application 7-119761, the frictional engagement element and bearing have approximately the same diameter.

The bearings of the conventional apparatus discussed above transmit a high load of servo power to maintain the connection of the frictional engagement element. This is different form the common use of bearings which is merely to support an axial force for the purpose of engaging gear teeth, or maintaining a gap between parts. A large transmission torque capacity can be obtained by manufacturing a bearing having a large diameter. Providing a large diameter bearing also results in a low number of design elements of the frictional engagement element. However, when the bearing and the frictional engagement element have approximately the same diameter, the bearing is in a high load state which results in high peripheral velocity, thereby reducing the endurance of the surface of the bearing.

The bearing must be manufactured to have a small diameter to decrease peripheral velocity and thereby achieve a high endurance. Thus, it is preferable if the bearing has a smaller diameter than the frictional engagement element. However, a thrust member must extend in the radial direction to transmit thrust force from the bearing to the frictional engagement element. However, new problems arise in conjunction with this application of force. Namely, the annular frictional engagement element is held at both sides in the axial direction by a reactional member and the thrust member at the time the clutch engages. As a result, a space is formed when the outer periphery of the apparatus is closed by these three objects. Lubrication oil for the frictional engagement element is supplied by centrifugal force. Lubrication oil is supplied from the inner radial side of the frictional engagement element and therefore the lubrication oil accumulates in this space. The accumulation of oil in this space creates a force from the frictional engagement member in the axial direction, which separates it from the reaction member and the thrust member. This force decreases the engaging force of the hydraulic servo with the frictional engagement element.

It is therefore a first aspect of the invention to provide a stationary cylinder type of power transmission apparatus which improves endurance by decreasing the peripheral velocity of the bearing, while preventing a decrease in the engaging force of the hydraulic servo with the frictional engagement element caused by the accumulation of oil.

It is a second aspect of the invention to provide such an apparatus that promotes centrifugal hydraulic expulsion.

It is a third aspect of the invention to provide a compact apparatus that decreases the peripheral velocity of the bearing by using a return spring to support the thrust member.

If the frictional engagement element and the bearing are lined up in the radial direction, a plate spring can be used to provide a widely bending potential force on the thrust member. The force is transmitted axially in the space between the frictional engagement element and the bearing. Thus, a fourth aspect of the invention is to improve the strength of the thrust member.

In order to achieve the first aspect, a stationary cylinder type of power transmission apparatus in accordance with the invention is provided with two rotational members. A frictional engagement element is linked to freely transmit rotational power to the outer periphery of one of the rotational members and to the inner periphery of the other rotational member. A thrust member and a reactional member hold the frictional engagement element. The thrust and reactional members are disposed on opposite sides of the frictional engagement element in the axial direction. A hydraulic servo transmits a load to the thrust member through a bearing, so that an axially directed force engages the frictional engagement element. The bearing is disposed interior to the frictional engagement element in the radial direction. The thrust member extends from the bearing and along the frictional engagement element in the radial direction. An expulsion port expels oil that is supplied from an inner peripheral side of the frictional engagement element. The oil is expelled from the vicinity of an outer peripheral side of a space that is formed when the frictional engagement element is held by the thrust member and the reactional member. The expulsion port can be provided in either the frictional material that forms the thrust member and the frictional engagement element, or in the reactional member. When the expulsion port is established in the frictional material, the radially directed channel is appropriately defined in relation to the thickness of the frictional material.

In order to achieve the second aspect, the thrust member includes an annular indentation in its side surface. The expulsion port includes an aperture at the outer peripheral side wall surface of the indentation.

In order to achieve the third aspect, the return spring is disposed between the thrust member and the reactional member. The return spring is spaced the same distance from the frictional engagement element as the bearing in the radial direction.

In order to achieve the fourth aspect, the thrust member includes a curved section that extends in the radial direction from a position abutting the bearing, to a position abutting the frictional engagement element. A depression that defines an inner surface of the curved section forms the annular indentation.

In accordance with the invention, the thrust member expels oil that is disposed in the space enclosed by the reactional member and the frictional engagement element. The oil is expelled from an outer side of the space. Thus, oil accumulation is prevented by the thrust member which extends in the radial direction. It is therefore possible to prevent oil accumulation caused by centrifugal force. Therefore, the invention prevents a decrease in the engagement force of the hydraulic servo with the frictional engagement element that is caused by the accumulation of oil, and improves endurance by lowering the peripheral speed of the bearing.

The expulsion port for removing accumulated oil is aligned with the centrifugal force of the oil. Thus, the oil is expelled from the closed space smoothly.

A return spring abuts the side of the bearing and extends radially to the frictional engagement element side of the apparatus. This allows the bearing to have a low peripheral velocity. The frictional engagement element and the return spring can be aligned in the radial direction which allows the apparatus to be compact. The spring can also be disposed within the frictional engagement element.

The strength of the thrust member is improved because it is curved. The accumulated oil reaches the expulsion port by virtue of the indentation at the inner side of the curved part of the thrust member. Accordingly, the apparatus can be manufactured to be more compact because the curved part of the thrust member improves both its strength and oil expulsion.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

Further objects, details and advantages of the invention will be apparent from the following detailed description, when read in conjunction with the drawings.
FIG. 1 is a cross-sectional view of a power transmission apparatus in accordance with a first embodiment of the invention;
FIG. 2 is a cross-sectional view of a portion of the power transmission apparatus of Fig. 1;
FIG. 3 is a cross-sectional view of a portion of a power transmission apparatus in accordance with a second embodiment of the invention;
FIG. 4 is a front view of a portion of frictional disks of a power transmission apparatus in accordance with a third embodiment of the invention;
FIG. 5 is a cross-sectional view of a complete automatic transmission provided with the power transmission apparatus shown in Fig. 1; and
FIG. 6 is a diagram that shows the operation of an automatic transmission.

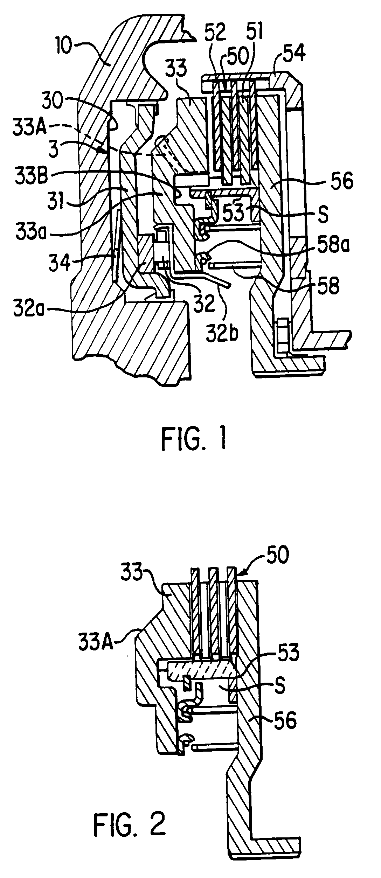

Figs. 1 and 2 show a first embodiment of a stationary cylinder type of power transmission apparatus in accordance with the invention. The apparatus of this embodiment is a clutch. A stationary cylinder type of clutch is provided with two rotational members, a hub 53 and a drum 54. A frictional engagement element 50 is linked to an outer periphery of hub 53 and an inner periphery of drum 54 so as to transmit rotational power. A thrust member 33 and a reactional element 56 hold frictional engagement element 50. Thrust member 33 and reactional element 56 are disposed on opposite sides of the frictional engagement element 50 in an axial direction. These elements are disposed within a case 10 which is fixed. A hydraulic servo 3 includes a piston cylinder mechanism for applying a load to a thrust member 33 through a bearing 32 in the axial direction. The thrust member 33 contacts the frictional engagement element 50.

The bearing 32 is a thrust roller bearing that has a small diameter. The bearing 32 is disposed interior to the frictional engagement element 50 in a radial direction. The thrust member 33 is an annular shaped thick plate that extends from the bearing 32 in the radial direction. The thrust member 33 also extends along the frictional engagement element 50 in the radial direction.

The frictional engagement element 50 has a plurality of frictional disks 52. The frictional disks 52 are linked to an inner peripheral spline of the drum 54 so that they can slide freely in the axial direction. A plurality of separator plates are also linked to a spline at the outer periphery of hub 53. The separator plates are held between the frictional disks 52 so that they can slide freely in the axial direction.

Fig. 2 shows the frictional engagement element 50 when it is held by the thrust member 33 and the reactional member 56. A space S is created when an outer side of the space is closed.

Expulsion port 33A is defined to expel oil that is supplied from an inner peripheral side of the frictional engagement element 50. The oil is expelled via the outer side of the space S. The expulsion port 33A is established in thrust member 33. Fig. 1 shows the apparatus when the clutch is released. Fig. 2 shows the apparatus when the clutch is engaged.

The position of an aperture at the space S side of the expulsion port 33A is clearly recognizable by comparing Figs. 1 and 2. The aperture is shown in cross-section as the difference in position between the separator plates 51 and the spline engaged part of the hub 53.

The hydraulic servo 3 is disposed within an annular cylinder 30 formed at the end wall of a case 10, in free sliding engagement in the axial direction. A plate spring 34 is positioned to prevent floating movement during the hydraulic load release of an annular piston 31. The piston 31 is equipped with a seal ring at its inner and outer peripheries. The plate spring 34 is disposed between the cylinder 30 and the piston 31.

The roller bearing 32 is provided with an annular race 32a that is formed from a thick plate. A race 32b is curved in the axial direction at its inner and outer peripheral sides. The race 32a is positioned to fit into and engage a curved section of the piston 31. The inner peripheral side of the curved part of the race 32b is positioned to fit into the inner periphery of the thrust member 33. The outer peripheral side of the curved part of race 32b is positioned as a roller suppressing the bearing cage.

The thrust member 33 is an annular member formed from a thick plate and abuts the inner peripheral side of bearing 32. The thrust member 33 roughly offsets the race 32a by absorbing the width of the bearing at the frictional engagement element side of the apparatus. The abutment of the outer peripheral side of the frictional engagement element 50 is further offset at the frictional engagement element 50 side of the apparatus. The thrust member 33 includes a curved portion 33a. The curved portion extends from the bearing 32 to the frictional engagement element 50 in the radial direction. An annular cavity 33B is defined as a depression at an inner side of the curved portion 33a. A spline is formed at the outer peripheral side wall surface of cavity 33B in an inserted engagement to the outer peripheral spline of the hub 53. By the inserted engagement of both splines, the thrust member 33 can be stopped in its rotation without corresponding rotation of the hub 53.

The reactional element 56 is an annular member formed from the same type of thick plate as thrust member 33. The outer peripheral side of he reactional element 56 abuts the frictional engagement element 50. This abutment is somewhat offset in the radial direction from the frictional engagement element 50, as compared to the part linked to the input axle of the inner peripheral side. The reactional element 56 and a supporting member for supporting the hub 53 combine to provide component transmitting power to the hub 53.

A return spring 58 is provided between the thrust member 33 and the reactional element 56. The return spring 58 includes a plurality of compression coil springs that are equally spaced in the radial direction. The coil springs are aligned with the peripheral radius of the bearing 32. One side of the spring 58 abuts the thrust member 33 through a retainer 58a. The other side of the spring 58 directly abuts the reactional element 56. The position of the spring 58 is determined by the cutaway of the hub 53.

The space S side of the plurality of equally spaced expulsion ports 33A that are formed in the thrust member 33 and extend in the radial direction is disposed at the outward peripheral side wall surface of the indentation 33B. Specifically, it is an aperture formed in a valley created between two sides of the spline, as shown in Fig. 1 as a dotted line, and in Fig. 2 as a solid line. As a result, the aperture is aligned with the expulsion port 33A in the direction of the centrifugal force of the expulsion of the oil from the space S. Moreover, the reactional element 56, to which the hub 53 is fixed, is linked to an input component so as to transmit rotation. The input component is in an inserted engagement to the spline formed on the inner peripheral side, i.e., the component in equal correspondence to the input axle component. The drum 54 is linked to a corresponding output component on the back of the reactional element 56 so as to the transmit rotation.

Lubricating oil is supplied to the frictional engagement element 50, in conjunction with the usual supply, in the direction of release from the inner radial direction of the frictional engagement element 50. Accordingly, when the clutch is released, as shown in Fig. 1, lubricating oil at the inner periphery of the hub 53 does not have centrifugal force. However, oil is supplied to the spline through the oil holes of the hub (not shown). The oil exits in the radial direction outward through the gap between the separator plates 51 of the frictional engagement element 50 and the frictional disks 52, between the frictional disks 52 and the thrust member 33, and between the frictional disks 52 and the reactional element 56. The oil reaches the spline portion of the drum 54, and is released outward from the gap between the thrust member 33 and the drum 54.

When hydraulic fluid is supplied within the cylinder 30 of the hydraulic servo 3, the piston 31 is pushed outward against the force of the return spring 58. As a result, the axially directed force is transmitted, via the bearing 32 and the thrust member 33, to the frictional engagement element 50. However, these gaps do not exist in the clutch engaged state shown in Fig. 2. The outer peripheral side is formed by the closed space S, closed from the inner peripheral edge of the thrust member 33, extending to the inner peripheral spline of the reactional member 56 and through the inner peripheral edge of the frictional engagement element 50.

The expulsion port 33A is functional in the clutch engaged state. The lubricating oil accumulated between the hub 53 and the frictional engagement element 50 is expelled by the centrifugal force of the thrust member 33 which rotates with the engaged spline of the hub 53. The oil is expelled from the closed space S to an external part of the apparatus.

In accordance with the preferred embodiment of the invention, the accumulation of oil is prevented by the thrust member 33 that extends in the radial direction. Thus, applying a thrust force in the axial direction does not cause the reactional element 56 and the thrust member 33 to be separated from the frictional engagement element 50 due to the accumulation of lubrication oil. Thus, removing the force created by the accumulation of hydraulic oil prevents the engagement force of the frictional engagement element 50 with the hydraulic servo 3 from being decreased.

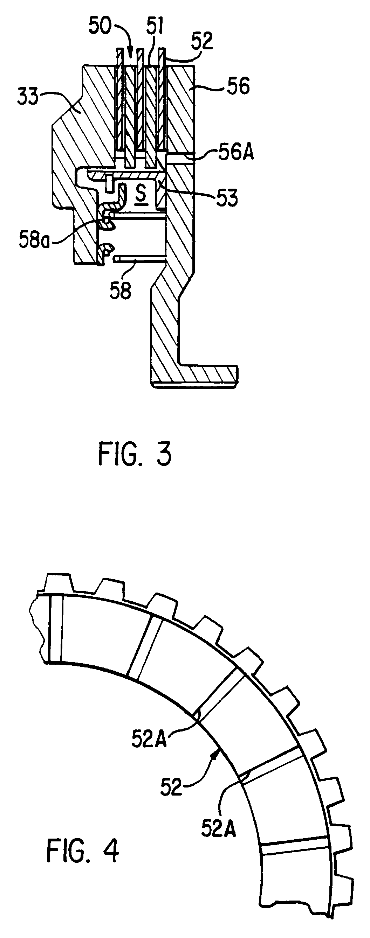

Fig. 3 shows a second embodiment of the invention. In this embodiment, the expulsion port 56A is formed by an aperture in the outer periphery of space S at the side of the reactional element 56. The other elements of the apparatus are the same as the corresponding elements of the first embodiment. The elements operate in the same manner as those of the first embodiment and the same advantages are obtained.

Fig. 4 shows a third embodiment of the invention. In this embodiment, the expulsion port is a channel 52A formed in frictional disk 52 that extends in the radial direction. The same advantages are obtained as those of the first embodiment. However, the lubricating oil flow is expelled in the same way as during the clutch release, i.e., between and through the engaged surface of the frictional disks 52 of the frictional engagement element and the separator plates. Thus, this embodiment provides the advantage of cooling the frictional engagement element during clutch engagement.

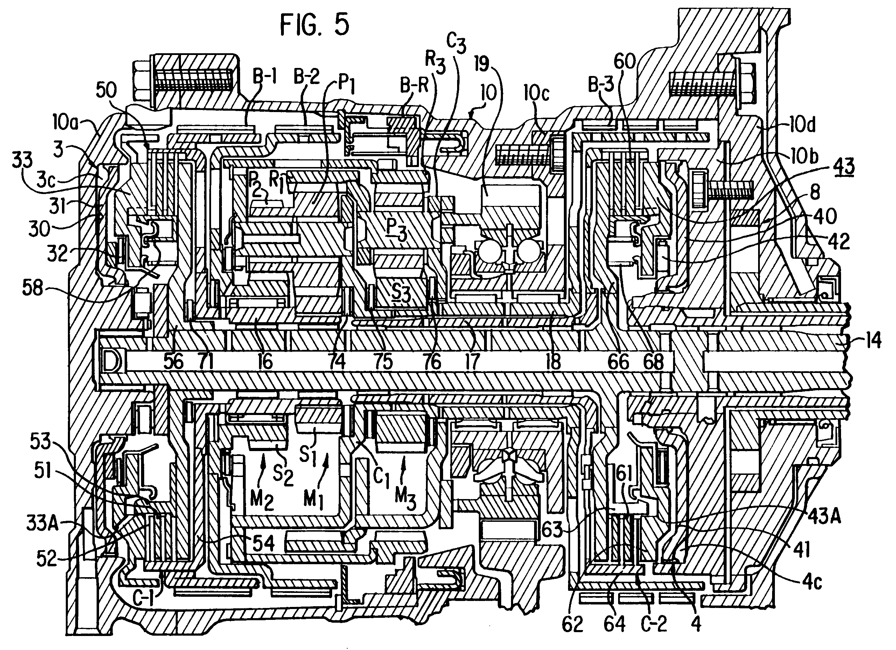

Fig. 5 shows a complete automatic transmission provided with the clutch of the first embodiment. The automatic transmission transmits the operation input to the input axle 14 back to first gear after having been in fifth gear. The three planetary gear sets M₁, M₂ and M₃, output to output gear 19, and form the main body of the transmission M.

The transmission M is disposed within the transmission case 10. The transmission M is constructed from three levels of planetary gear sets M₁, M₂ and M₃, which are linked to brakes B-1, B-2, B-3 and B-R and the clutches C-1 and C-2. Planetary gear sets M₁ and M₃ are provided with sun gears S₁ and S₃, and ring gears R₁ and R₃, respectively. Ring gears R₁ and R₃ rotate freely in engagement with pinion gears P₁ and P₃, supported by carriers C₁ and C₃. Planetary gear set M₂ is provided with pinion gear P₂, has a smaller diameter than the pinion gear P₁, and is engaged with sun gear S₂. Pinion gear P₂ is rotatably linked to pinion gear P₁, and is supported in free rotation by carrier C₁. Ring gears R₁ and R₃, and carriers C₃ and C₁, respectively of both gear sets M₁ and M₃, are mutually linked. Sun gears S₁ and carriers C₁ of the gear set M₁ are input elements, and are respectively linked to input axle 14 through the clutch C-1 and C-2. The mutually linked ring gear R₁ and carrier C₃ are linked to the output gear 19.

Further, the sun gear S₁ of the gear set M₁ can be stopped in the transmission case 10 by brake B-1. Sun gear S₂ of the gear set M₂ can be stopped in the same manner in the transmission case 10 by brake B-2. Ring gear R₃, linked to the carrier C₁, can be stopped in the transmission case 10 by brake B-R. Further, sun gear S₁ is linked to clutch C-1 through sun gear axle 16, embedded in the outer periphery of input axle 14. The carrier C₁ is linked to clutch C-2 through carrier axle 17 embedded in the outer periphery of the input axle 14. Sun gear S₃ is linked to the brake B-3 through the sun gear axle 18 imbedded in the outer periphery of the carrier axle 17. Each brake, except for brake B-R, is constructed as a band brake. Brake B-R is constructed as an engagement-type of brake. However, the invention is not limited to these constructions.

Two hydraulic servos 3 and 4 are provided to engage and disengage from the two input clutches C-1 and C-2, which are disposed at both ends and held by transmission channel M. The cylinders 30 and 40 of each hydraulic servo 3 and 4 are stationary types of cylinders and are directed against the respective end walls 10a and 10b of the transmission case 10. The transmission case 10 is a fixed part enclosing the transmission channel M. Cylinders 30 and 40 are respectively fixed in a freely sliding inserted engagement with each other. Two pistons 31 and 41 define the hydraulic chambers 3C and 4C for hydraulic supply, in cooperation with the respective cylinders 30 and 40.

Between each frictional engagement element 50 and 60 of both clutches C-1 and C-2, and the respective pistons 31 and 41 of both hydraulic servos 3 and 4, the relative rotation between each frictional engagement element 50 and 60 and each piston 31 and 41 is respectively allowed. This occurs during the hydraulic supply and the servo force from each piston 31 and 41 is transmitted respectively to the bearings 32 and 42 arranged at frictional engagement elements 50 and 60. Further, between bearings 32 and 42 and the frictional engagement elements 50 and 60, thrust members 33 and 43 are provided. Expulsion ports 33A and 43A, of the type of expulsion ports used in the first embodiment of the present invention, are respectively provided at each thrust member 33 and 43.

Each frictional engagement element 50 and 60 of clutches C-1 and C-2 are linked to each hub 53 and 63 through reactional flanges 56 and 66, respectively, in the input axle 14 which operates as the drive side rotational part. Linked through the sun gear axle 16 in the sun gear S₁ of the planetary gear set M₁ of the driven side rotational member, or, linked through the carrier axle 17 in the carrier C₁, drums 54 and 64 are arranged on the outer peripheral side of the hubs 53 and 63 held by each frictional engagement element 50 and 60. Each frictional engagement element 50 and 60 includes a plurality of magnetic disks 52 and 62, that have a facing adhered onto both surfaces, and a plurality of separator plates 51 and 61 that meet mutually with these in the axial direction. Each frictional disk 52 and 62 is in an engaged insertion with the spline on the outer peripheral side of the inner peripheral surface of each drum 54 and 64. Each separator plate 51 and 61 is in an engaged insertion with the spline on the inner peripheral side of the outer peripheral surface of the hub 53 and 63. Accordingly, the frictional engagement elements 50 and 60, respectively, are linked to each clutch hub 53 and 63 that is thrust to each hydraulic servo 3 and 4, and each clutch drum 54 and 64.

The thrust force of both pistons 31 and 41 is transmitted through the thrust members 33 and 43 to the frictional engagement elements 50 and 60. The race of the thick plate of each bearing 32 and 42 abuts the inner radial side of each piston 31 and 41. The thin plate races are constructed of thrust roller bearings imbedded in the inner periphery of the thrust members 33 and 43.

Between both bearings 32 and 42 and the frictional engagement elements 50 and 60, the thrust members 33 and 43 are arranged as spline embedded without relative rotational capability and with rotational capability in the sliding direction, in the outer peripheral surface of the hubs 53 and 63, respectively. Both thrust members 33 and 43 oppose each bearing 32 and 42 on the inner peripheral side. Each frictional engagement element 50 and 60 opposes the outer peripheral side. Thrust members 33 and 43, on one side of their outer radial sides, possess abutments against the frictional disks 52 and 62. The same method is used on the outer peripheral surface of the abutments of separator plates 51 and 61. Hubs 53 and 63 are linked through the reactional force flanges 56 and 66 in the input axle 14, as they are spline engaged. Hubs 53 and 63 do not have relative rotational capability, and can slide in the axial direction.

Between each thrust member 33 and 43, and the frictional engagement elements 50 and 60, thrust force resisting the movement of pistons 31 and 41, respectively, in conjunction with the supply of hydraulic to oil chambers 3C and 4C is possessed by the return springs 58, 68, as contributed by the pistons 31 and 41, respectively. The return springs 58 and 68 abut the reactional flanges 56 and 66 serving as the reactional members embedded in the position-determining hole through the spring retainer in the respective thrust members 33 and 43, or in the hub 53 and 63.

Sun gears S₁, S₂ and S₃, and a plurality of thrust bearings 71, 74, 75 and 76, are provided in the same radial position in a linked relation to the three planetary gear sets M₁, M₂, and M₃ of the transmission channels M. The axially directed force of the input clutch C-1 is utilized in a construction that transmits to an intermediate wall 10C through a plurality of thrust bearings 71, 74, 75 and 76.

In this embodiment, the reactional member, in conjunction with receiving the axially directed force from each input clutch C-1 and C-2, includes two reactional flanges 56 and 66 transmitting rotational force from the input axle 14 to each input clutch C-1 and C-2. The reactional flange 66 on the input clutch C-2 side transmits an axially directed force through input axle 14 to the end wall 10a. At the time of welding to the flange of the input axle 14, it is fixed so that it does not move in the axial direction. The axially directed force is transmitted to the intermediate wall 10c through the transmission channel M. The reactional flange 56 on the input clutch C-1 side is linked so that it is movable in the axial direction, in a spline engagement to the input axle 14.

Further, although the circuit construction is not shown, a hydraulic control apparatus, operating through a bulb body, accumulates oil in an oil pan. Oil pan 8 is driven by hydraulic power from the rotation of a torque converter case, supplying a lubricating oil path to the hydraulic servo 3 and 4 of the clutch, to each brake of the hydraulic servo, and to the torque converter. A rotation path of lubricating oil is established to each part of the transmission channels, including the frictional engagement elements 50 and 60. Also, the lubricating oil path against the frictional engagement elements 50 and 60 is an oil path within the stator support axle, passing through as the lubrication pressure output of the bulb body (not shown), providing the axially directed oil path within the input axle 14, and the radially directed oil path.

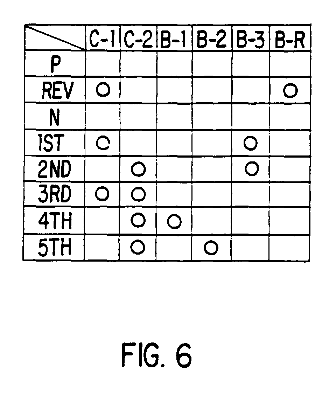

The automatic transmission supplies hydraulic fluid to the hydraulic servo corresponding to each clutch and brake under the control of the hydraulic control apparatus (not shown). Each gear change is achieved as shown in Fig. 6, by the engagement of each clutch and brake (shown as a circle), and by disengagement (shown as a blank space).

The invention has been explained above based on the three preferred embodiments; however, the invention is not limited to the constructions shown as examples of the above preferred embodiments; within the range of items described in the claims, various changes can be made in the construction, so that various broad applications are possible of the power transmission apparatus.

## Claims

1. A stationary cylinder type of power transmission apparatus for use with oil and having an interior and an exterior, comprising:
two rotational members 53 and 54;
a thrust member 33;
a reactional member 56;
a frictional engagement element 50 having a radius, an axis, and disposed between and linked to the two rotational members 53 and 54 such that the frictional engagement element 50 freely transmits a rotational force to an outer periphery of one of the rotational members 53 and to an inner periphery of the other rotational member 54, the frictional engagement element 50 is engageable by and disposed between the thrust member 33 and the reactional member 56 in the axial direction;
a bearing 32 disposed interior to the frictional engagement element 50 in the radial direction, such that the thrust member 33 extends in the radial direction from the bearing 32 and along the frictional engagement element 50;
a hydraulic servo 3 for applying a force in the axial direction to the thrust member 33 via the bearing 32, such that the thrust member 33 transmits the force to the frictional engagement element 50, thereby engaging the frictional engagement element 50 with the thrust member 33 and the reactional member 56; and
an expulsion port 33A, wherein a space S is created when the frictional engagement element 50 is engaged with the thrust member 33 and the reactional member 56, the expulsion port 33A is contiguous with an exterior side of the space S, oil is supplied to the space S from an interior side of the frictional engagement element 50, and the expulsion port 33A expels oil from the exterior side of the space S to outside of the space S.

2. The apparatus according to claim 1, wherein the expulsion port 33A is defined by the thrust member 33.

3. The apparatus according to claim 2, wherein an annular indentation is defined in a side of the thrust member 33, and the expulsion port 33A includes an aperture defined in an exterior side wall of the indentation.

4. The apparatus according to claim 3, wherein the thrust member 33 includes a curved portion that extends in the radial direction from a position where the thrust member 33 abuts the bearing 32 to a position where the thrust member 33 abuts the frictional engagement element 50, and the indentation is defined by a depression at an inner side of the curved portion.

5. The apparatus according to claim 1, wherein the expulsion port 56A is defined in the reactional member 56.

6. The apparatus according to claim 1, wherein the frictional engagement element 50 includes frictional material and at least one separator plate, and the expulsion port 52A is defined in the frictional material as a groove that extends in the radial direction.

7. The apparatus according to claim 1, claim 2, claim 3, claim 4, claim 5, or claim 6, further including a return spring 58 disposed between the thrust member 33 and the reactional member 56, and spaced the same distance from the frictional engagement element 50 as the bearing 32 in the radial direction.
